Europäisches Patentamt

European Patent Office

Office européen des brevets

(19)

(11) Publication number: **0 323 731 B1**

# EUROPEAN PATENT SPECIFICATION

(12)

(45) Date of publication of patent specification: **23.09.92**  (51) Int. Cl.⁵: **B60T 8/32**, B60T 8/34, B60T 8/26

(21) Application number: **88312105.5**

(22) Date of filing: **21.12.88**

(54) Improvements in hydraulic anti-lock braking systems for vehicles.

(30) Priorite: **04.01.88 GB 8800021**

(43) Date of publication of application:
**12.07.89 Bulletin 89/28**

(45) Publication of the grant of the patent:
**23.09.92 Bulletin 92/39**

(84) Designated Contracting States:
**DE FR GB IT**

(56) References cited:
**EP-A- 0 242 132**
**DE-A- 3 403 237**

(73) Proprietor: **LUCAS INDUSTRIES public limited company**
**Great King Street**
**Birmingham, B19 2XF West Midlands(GB)**

(72) Inventor: **Farr, Glyn Phillip Reginald**
**21 The Hamlet**
**Leek Wootton Warwickshire(GB)**

(74) Representative: **Spall, Christopher John et al**
**BARKER, BRETTELL & DUNCAN 138 Hagley Road**
**Edgbaston Birmingham B16 9PW(GB)**

## Description

This invention relates to improvements in hydraulic anti-lock braking systems for vehicles of the four wheel type of the kind in which the behaviour of a braked front wheel is sensed by a device which is operative at a skid point to actuate an anti-lock modulator in an anti-lock mode for modulating the supply of brake-applying fluid from a supply, not only to that brake to prevent the front wheel from locking, but also to the brake on a rear wheel of the vehicle, which may be the brake on the diagonally opposite rear wheel.

When the brakes of a moving vehicle are applied, the resulting deceleration force transfers weight from the rear wheels to the front wheels. A vehicle with static 60:40 front-rear weight ratio would typically have an 80:20 ratio when fully retarded. The braking ratio for this type of vehicle, therefore, usually lies between the two extremes at 70:30. This would provide enough front bias for everyday braking to prevent a premature rear wheel lock.

To modify the braking ratio at higher decelerations, apportioning valves are used. These valves transmit pressure to the rear brakes, equal to that at the front brakes, to a pre-determined level. Above this pre-determined level, the pressure to the rear brakes is metered so that it rises with increase in input pressure, but at a reduced rate of pressure increase.

Known apportioning valves are suitable for conventional hydraulic braking systems where the driver is able to push harder on the brake pedal, after the front wheels have locked, in order to obtain extra retardation from the rear wheel brakes. However, in hydraulic anti-lock braking systems of the kind set forth the levels at which the rear brakes are utilised is limited by the modulator.

It is therefore necessary to optimise braking utilisation.

This is particularly true in hydraulic anti-lock braking systems of the kind set forth since at the deceleration levels possible on low friction road surfaces where the braking ratio limits the rear brakes to 30% of the retarding force, the ideal contribution is 40%. In practice, the effect of the rear brakes is reduced further by shoe return springs normally used by rear drum brakes. In consequence, it is possible that only 50% utilisation of the rear brakes is achieved at pressures associated with low friction surfaces. During anti-lock control this utilisation is reduced still further by the cyclic pressure changes of the associated front wheel brake.

At the higher decelerations achieved on good road surfaces the utilisation of the rear brakes is much improved, particularly beyond the point at which the apportioning valve starts to meter fluid to the rear brakes at a reduced rate. In the anti-lock mode at the higher decelerations, the reduction in front brake pressure will cause a smaller pressure loss at the rear brake in proportion to the change in pressure slope. For example, if the pressure slope, after cut-in, is 3:1, a 9 bar reduction in front brake pressure will only cause a 3 bar reduction at the corresponding rear brake. The rear brake therefore gives an effective contribution to vehicle deceleration.

According to our invention, in an hydraulic anti-lock braking system of the kind set forth incorporating an apportioning valve, the apportioning valve comprises a housing having a bore in which works a piston adapted to control operation of a metering valve through which pressure from the master cylinder is applied to the rear brake, the piston being movable in the bore between a first advanced position defined by co-operation with a stop, and a retracted position, a spring biassing the piston into the advanced position in which the metering valve is open, and the piston having first and second pressure responsive faces of greater and smaller effective areas of which the first face is responsive to pressure applied to the rear wheel brake through the metering valve, and the second pressure responsive face is responsive to pressure from the modulator which is applied to the front wheel brake, the arrangement being such that the metering valve is open until the pressures acting over the pressure-responsive faces attain values such that the resultant force acting on the piston is sufficient to cause the piston to move towards the retracted position against the force in the spring, whereby to enable the metering valve to close.

For normal operation, the pressures applied to the front brake and to the rear brake are equal until the cut-in point is reached. Above the cut-in point the rear brake pressure will rise with increase in front brake pressure, but at a reduced rate of pressure increase due to a metering effect of the metering valve.

In an anti-lock mode, up to the cut-in point, the rear brake pressure will increase above that applied to the front brake and the rear brake will retain a relatively greater proportion of pressure than the front brake during cyclic pressure changes dictated by the modulator. Above the cut-in point the pressure applied to the rear brake will not increase if the pressure applied to the front brake is modulated, but a greater portion of rear pressure will be retained as before.

Our invention therefore enables us to increase the level of braking contributed by the rear brakes, after the level of braking contributed by the front brakes has been limited at the adhesion level of the front wheels, particularly on surfaces of relatively low co-efficients of friction.

In addition the magnitude of the release of pressure from the rear wheel brakes relative to the front wheel brakes is reduced during an anti-lock mode at the front wheels.

The piston may be loaded by means, suitably a spring, responsive to the weight on the rear axle of the vehicle so that, when laden, the magnitude of the cut-in point is increased further, together with the level to which the pressure applied to the rear wheel brakes will rise above the front wheel brakes during an anti-lock mode at the front wheels.

Thus we can increase the level of braking contributed by the rear brakes in the case of a fully laden vehicle, once the front wheels have been controlled by anti-lock modulators.

Some embodiments of our invention are illustrated in the accompanying drawings in which:-

Figure 1 is a layout of a portion of an hydraulic anti-lock braking system for a vehicle of the four wheel type;

Figure 2 is a graph of front wheel brake pressure (Pf) plotted against rear wheel brake pressure (Pr);

Figure 3 is a layout similar to Figure 1 but including a modified apportioning valve; and

Figure 4 is a layout of yet another hydraulic anti-lock braking system.

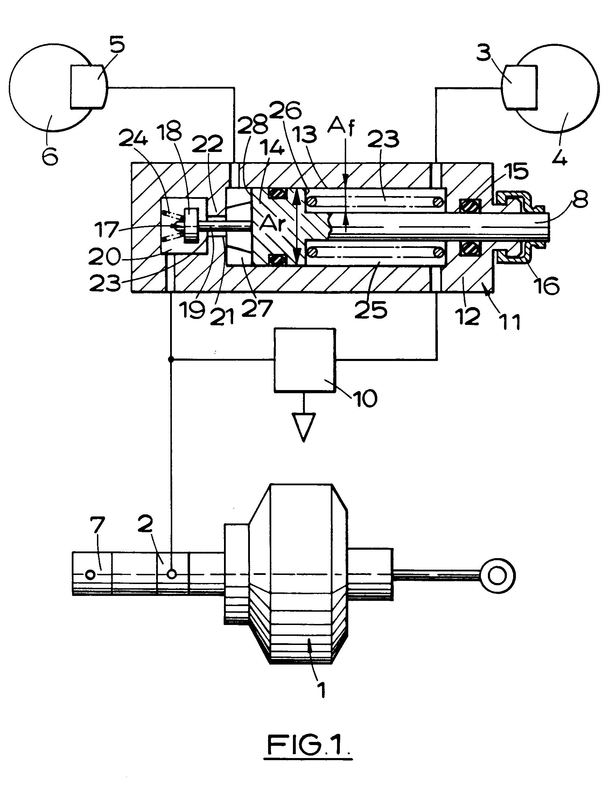

The hydraulic braking system illustrated in Figure 1 of the accompanying drawings is of the 'X' split type. In the system a pedal-operated booster-assisted tandem master cylinder 1 is adapted to apply the brakes on the front and rear wheels of a four wheel vehicle. Specifically two similar independent braking circuits are provided of which only one is illustrated. In the primary circuit shown the primary pressure space 2 of the master cylinder 1 is adapted to operate a brake 3 on one front wheel 4 of the vehicle, and a brake 5 on the diagonally opposite rear wheel 6. Since the secondary circuit is similar to the primary circuit it has not been illustrated. In this circuit the secondary pressure space 7 is adapted to operate a brake on or the other front wheel and on the other rear wheel.

Each circuit incorporates an anti-lock modulator 10 of known construction. The system is therefore of the two-channel anti-lock type with front control. An apportioning valve 11 is also incorporated in each circuit. The apportioning valve 11 comprises a housing 12 having a stepped bore 13 in which works a differential piston 14 of which the portion of smaller area comprises a stem 8 which projects outwardly from an end wall of the housing, through a seal 15 and a sealing boot 16. A metering valve 17 is incorporated in the housing 12 and comprises a head 18 carried by a stem 19. The head 18 is located in a chamber 20 in the housing which spaced from, and is of smaller diameter than, the larger diameter of the bore 13. The stem 19 extends rearwardly through an opening 21 in a partition 22 between the chamber 20 and the bore 13 for co-operation at its free end with the adjacent inner end of the piston 14.

A compression spring 23 acts between the piston 14 and the housing 11, normally to urge the piston 14 inwardly into a first advanced position defined by the engagement of the piston with the partition 22 which constitutes a stop. In this position the head 18 is held away from a seating 23 on the partition 22, which seating surrounds the opening 21, against the force in a light return spring 24.

The pressure space 2 is connected to the modulator 10 which, in turn, is connected to the front brake 3 through a chamber 25 defined in the bore 13 between the portions of the piston 14 which are of greater and smaller areas. The pressure in that chamber 25 acts over a pressure responsive annular face 26 of an area equal to the difference in areas between the two portions of the piston 14.

The pressure space 2 is also connected to the brake 5 through the chamber 20, and the metering valve 17, and through a chamber 27 defined in the bore 13 between the partition 22 and the piston 14. The pressure in the chamber 27 acts on the piston over a pressure-responsive face 28 defined by the end of the piston 14 which is of greater area.

In the normal inoperative position illustrated in the drawings the piston 14 is held in its advanced position so that the metering valve is open.

When the master cylinder 1 is operated, in the primary circuit fluid under pressure passes through the modulator and the chamber 25 to the front brake 3, and to the rear brake 5 on the diagonally opposite rear wheel 6, through the chamber 20, the metering valve 17, and the chamber 27. The piston 14 is therefore subjected to a force in opposition to the force in the spring 23 and substantially equal to equal pressures acting over an effective area equal to the portion 8 of the piston 14 which is of smaller area.

The pressures applied to the front brake 3 and to the rear brake 5 rise together until the force to which the piston 14 is subjected, plus the force in the spring 24, is sufficient to overcome the force in the spring 23. The piston 14 then moves relatively away from the partition 22 at a cut-in point at which valve 17 is allowed to close.

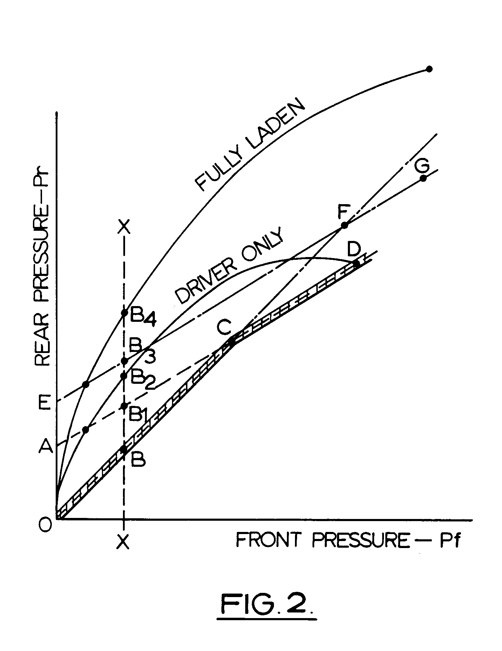

In the graph of Figure 2 in which the pressure applied to the front brake (Pf) is plotted against the pressure applied to the rear brake (Pr), the cut-in point is depicted at point C. Beyond the level of point C, the applied pressure acts over the said annular face 26 to move the piston 14 and to meter fluid to the rear brake 5, but at a lower rate of pressure increase compared with that of the increase in the pressure applied to the front brake 3. This characteristic, which is depicted by the line OCD, is typical of known pressure conscious apportioning valves.

In an anti-lock mode on surfaces of relatively low co-efficients of friction, however, the characteristic is far from typical. In such a mode a device adapted to sense the behaviour of the front wheel 4, suitably a speed sensor, or a torque sensing mechanism, is operative to actuate the modulator 10.

If the driver operates the master cylinder 1 when the limit of front brake pressure is reached, as shown by line X-X in Figure 2 which indicates that the vehicle is travelling over a surface of relatively low co-efficients of friction, the front wheel 4 tends to lock and the front brake 3 will be controlled by the anti-lock modulator 10. At the same time, the pressure in the rear brake 6 will increase from B to $B_1$, and the piston 14 will move relatively away from the partition 22 to permit the metering valve 17 to close.

The maximum possible pressure which can be applied to the rear brake 5 before the rear wheel 6 can lock is shown by point $B_2$ on the ideal, unladen vehicle-driver only, curve. This illustrates the magnitude of the difference between the conventional rear brake pressure level B and the ideal brake pressure level $B_2$ and explains why known two-channel anti-lock systems with front control experience relatively increased stopping distances on low friction surfaces. Known systems with independent control of rear brakes permit the rear brake pressure to rise, after the front brake pressure is controlled, and until the pressure $B_2$ is attained whereafter control of the rear wheels is effected.

In the system of Figure 1, as explained above, after pressure applied to the front wheel brake 3 is controlled by the modulator 10, the pressure applied to the rear wheel brake 5 will rise to $B_1$, and pressure will tend to hover substantially at such a value during the anti-lock mode.

In contrast, with a conventional known apportioning valve, the pressure applied to the rear brake 5 will cycle in response to cycling of the pressure applied to the front wheel brake 3 from B onwards, such that the rear wheel pressure will equal the front wheel pressure.

In the system of Figure 1, as stated above, the rear wheel pressure will rise to $B_1$. It will then cycle from $B_1$ to A is response to anti-lock activity associated with the front wheel brake 3. This means that the rear brake 5 will remain effective once an anti-lock mode has been instigated at the front brake 3. In consequence, the stopping distance for the vehicle will be reduced substantially to values normally attained by known systems with independent control of the rear brakes. In such a known system the rear wheel pressure would cycle vertically from $B_2$ towards the rear pressure baseline on the line X-X.

When the vehicle is travelling over a surface of a higher co-efficient of friction and the master cylinder 1 is operated to generate a sufficiently high pressure for the cut-in point C to be exceeded, the pressure applied to the rear wheel brake 5 will again cycle at a reduced pressure fall rate with respect to the pressure applied to the front brake 3 from the point at which the front brake 5 is controlled by the modulator 10, towards C and A.

In a modification of the construction shown in Figure 1, the piston 14 is loaded by a further spring (not shown) which conveniently co-operates with the free outer end of the piston 14. This further spring is responsive to rear axle weight changes so that braking control in a laden vehicle case is improved. For a normal case the pressure characteristic is depicted by the line OFG in Figure 2.

When the laden vehicle is subjected to an anti-lock control mode, the pressure applied to the rear brake 5 can increase further to B3 and can be cycled towards E. This, therefore, gives even better rear wheel braking.

In comparison, conventional known anti-lock systems with front control would again have maximum rear wheel brake pressure of B and cycle towards O, as in the previous unladen-vehicle, driver only case.

In a system with independent control of the rear brakes, the rear brake has a rear locking pressure of B4 and, in an anti-lock mode, will cycle downwards as before.

The point A on Figure 2 is determined by the force in the spring 23 divided by the diameter Ar of the portion of the piston 14 which is of greater area. Point C on Figure 2 is determined by the force in the spring 23 divided by the area of the portion 8 of the piston 14 which is of smaller area. The line ACD will cross the ideal curve between A and B, at a point corresponding to the surface of the lowest frictional co-efficient upon which the anti-lock system could be expected to work, and again at D, where the frictional co-efficient of the surface is at a maximum level.

As described above it will be clear from Figure 2 to one skilled in the art that improved utilisation of the rear brakes in an anti-lock mode is substantially OAC for the unladen vehicle - driver only case and OEF for the fully laden case. These benefits therefore improve the stopping distances of vehicles equipped with two-channel front controlled anti-lock systems to levels similar to the more complex and expensive system equipped with independent anti-lock control of the rear wheel brakes.

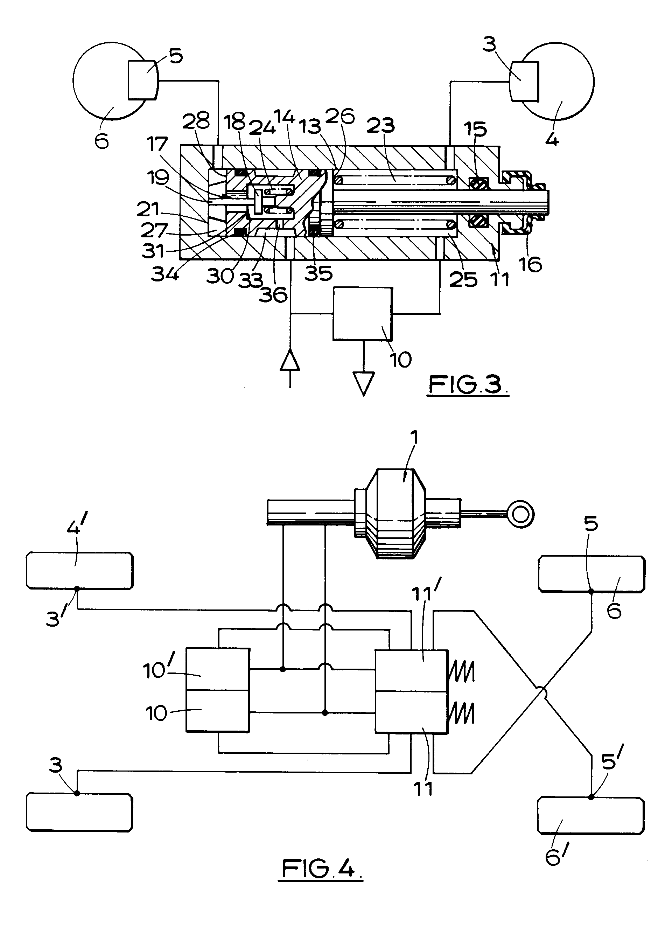

In the apportioning valve 11 incorporated in the braking system of Figure 3 the bore 13 is extended in length and the end of the piston 14 which is of greater area is provided with an axially extending blind bore 30 in which the valve head 18 is housed. The valve head 18 is adapted to co-operate with a seating 31 at the outer end of the bore 30.

In the inoperative position shown in Figure 3 of the drawings the head 18 is held away from its seating 31 by the co-operation of the stem 19 with a wall 32 at the adjacent end of the bore 13, which also defines the stop 21 for the piston 14. In this position an annular chamber 33 defined in the bore between spaced seals 34 and 35 on the piston 14 is in communication with the brake 5 through a port 36 and the open metering valve 17.

When the piston 14 moves relatively away from the stop 21 at the cut-in point, the seating 31 engages with the valve head 18 to close the metering valve 17.

The construction and operation of the braking system illustrated in Figure 3 is otherwise the same as that of Figure 1, and corresponding reference numerals have been applied to corresponding parts. The system of Figure 3 also operates in a similar manner to that described above with reference to Figure 2.

Figure 4 is a layout of a typical anti-lock braking system of the diagonal split type in which each half of the system is similar to that of Figure 1 or of Figure 3 described above. Specifically the layout is of a system of the diagonal split type equipped with front wheel controlled anti-lock modulators 10, 10′ and two apportioning valves 11, 11′, each as described above.

Each front wheel brake 3, 3′ is controlled by the respective modulator 10, 10′ together with the diagonally opposite rear brake 5, 5′ through the respective apportioning valve 11,11′.

The construction and operation of the system shown in the layout of Figure 4 is otherwise the same as those of Figures 1 and 3 described above and corresponding reference numerals have been applied to corresponding parts.

## Claims

1. An hydraulic anti-lock braking system for a vehicle of the four wheel type in which the behaviour of a braked front wheel (4) is sensed by a device which is operative at a skid point to actuate an anti-lock modulator (10) for modulating the supply of brake-applying fluid from a supply (2,7) not only to the brake (3) on the front wheel (4) but also a brake (5) on one rear wheel (6) of the vehicle, and an apportioning valve (11) is disposed between the supply and the rear brake (5) on the downstream side of the modulator (10), characterised in that the apportioning valve (11) comprises a housing (12) having a bore (13) in which works a piston (14) adapted to control operation of a metering valve (17) through which pressure from the supply (2,7) is applied to the rear brake (5), the piston being movable in the bore between a first advanced position defined by co-operation with a stop (22), and a retracted position, a spring (23) biassing the piston into the advanced position in which the metering valve is open, and the piston having first and second pressure responsive faces (28,26) of greater and smaller effective areas of which the first face (28) is responsive to pressure applied to the rear wheel brake (5) through the metering valve (17), and the second pressure responsive face (26) to pressure from the modulator (10) which is applied to the front wheel brake (3), the arrangement being such that the metering valve is open until the pressures acting over the pressure-responsive faces attain values such that the resultant force acting on the piston is sufficient to cause the piston to move towards the retracted position against the force in the spring, whereby to enable the metering valve to close.

2. A system according to claim 1, characterised in that the rear brake (5) is located on the diagonally opposite wheel (6) from the front brake (3).

3. A system according to claim 1 or claim 2, characterised in that piston (14) is of differential outline having a first portion of greater area working in a portion of the above which is of greater area, and a second portion of smaller area working in a portion of the bore which is of smaller area, the first pressure-responsive force (28) comprising the area of the first portion, and the second pressure-responsive face comprising an area defined by the difference in areas between the first portion and the second portion.

4. A system according to any preceding claim, characterised in that the metering valve (17) comprises a head (18), a seating (31) between the supply (2,7) and the rear wheel brake (5) with which the head is engageable to control communication between the supply (8) and the rear brake (5), a spring (24) acting to urge the head (18) towards the seating (31), and a stem (19) acting on the head (18) and through which a force is transmitted to hold the head (18) away from the seating (31) at least when the piston (14) is in the advanced position.

**5.** A system according to claim 4, characterised in that the stem (19) co-operates with the piston (18) and extends through a passage (21) in a partition (22), a face on the side of the partition (22) remote from the piston (14) defining the seating (31), and the face on the opposite side of the partition (22) defining the stop.

**6.** A system according to claim 4, characterised in that the head (18) is housed in a blind bore (30) in the piston (14) with which the supply (8) communicates, and the seating (31) is defined by an inwardly directed radial force at the open end of the bore (30), the stem (19) projecting from the blind bore (30) for co-operation with a wall at the adjacent end of the bore (31) which also defines the stop.

**7.** A system according to any preceding claim, characterised in that the piston (14) is loaded by means responsive to the weight on the rear axle of the vehicle whereby, when laden, the magnitude of the cut-in point is increased further.

**8.** A system according to claim 7, characterised in that the means comprises a load spring, and the second portion of the piston which is of smaller area comprises a stem (8) which projects from the housing (12) and with which the load spring co-operates.

**9.** An hydraulic braking layout of the tandem type comprising two independent braking systems, in which each system comprises a braking system according to any preceding claim, characterised in that the supply of each system comprises a respective one pressure space (2,7) of a tandem master cylinder (1).

**Patentansprüche**

**1.** Ein hydraulisches Antiblockier-Bremssystem für ein Fahrzeug der Vierrad-Bauweise, bei welchem das Verhalten eines gebremsten Vorderrades (4) durch eine Vorrichtung gemessen wird, welche an einem Rutschpunkt betätigbar ist, um einen Antiblockier-Modulator (10) zur Modulation der Zufuhr von Bremsbetätigungsfluid von einer Quelle (2, 7) nicht nur zu der Bremse (3) an dem Vorderrad (4), sondern auch zu der Bremse (5) an einem Hinterrad (6) des Fahrzeuges zu betätigen, und wobei ein Dosierventil (11) zwischen der Versorgung und der hinteren Bremse (5) an der stromabseitigen Seite des Modulators (10) angeordnet ist, dadurch gekennzeichnet, daß das Dosierventil (11) ein Gehäuse (12) mit einer Bohrung (13) umfaßt, in welcher ein Kolben (14) wirkt, welcher zur Steuerung des Betriebes eines Zumeßventiles (17) geeignet ist, durch welches Druck von der Versorgung (2, 7) zu der hinteren Bremse (5) aufgebracht wird, wobei der Kolben in der Bohrung zwischen einer ersten, vorbewegten Position, welche durch ein Zusammenwirken mit einem Anschlag (22) definiert wird, und einer zurückgezogenen Position bewegbar ist, wobei eine Feder (23) den Kolben in die vorwärts bewegte Position vorspannt, in welcher das Zumeß-Ventil offen ist, und wobei der Kolben erste und zweite Druckaufnahmeflächen (28, 26) mit größeren und kleineren wirksamen Bereichen aufweist, wobei deren erste Fläche (28) empfänglich ist für Druck, welcher auf die hintere Radbremse (5) über das Zumeß-Ventil (17) aufgebracht wird, und wobei die zweite druckempfindliche Fläche (26) auf Druck von dem Modulator (10) anspricht, welcher zu der Vorderradbremse (3) geleitet wird, wobei die Anordnung so gewählt ist, daß das Zumeß-Ventil offen ist, bis die Drücke, welche über die druckaufnehmenden Flächen wirken, Werte einnehmen, so daß die resultierende Kraft, welche auf den Kolben wirkt, ausreichend ist, um eine Bewegung des Kolbens in Richtung auf die zurückgezogene Position gegen die Kraft in der Feder zu bewirken, wobei das Zumeß-Ventil geschlossen werden kann.

**2.** System nach Anspruch 1, dadurch gekennzeichnet, daß die hintere Bremse (5) an dem der vorderen Bremse (3) diagonal gegenüberliegenden Rad (6) angeordnet ist.

**3.** System nach Anspruch 1 oder 2, dadurch gekennzeichnet, daß der Kolben (14) einen unterschiedlichen Umriß aufweist, mit einem ersten Bereich mit einer größeren Fläche, welche in einem Bereich desselben wirkt, welcher von größerem Flächenbereich ist, und einem zweiten Bereich mit einer kleineren Fläche, welcher in einem Bereich der Bohrung wirkt, welche von geringerer Fläche ist, wobei die erste auf Druck reagierende Fläche (28) den ersten Flächenbereich des ersten Bereiches umfaßt, und die zweite auf Druck reagierende Fläche einen Flächenbereich, welcher durch die Differenz in den Bereichen zwischen dem ersten Bereich und dem zweiten Bereich definiert ist, umfaßt.

**4.** System nach einem der vorhergehenden Ansprüche, dadurch gekennzeichnet, daß das Zumeß-Ventil (17) einen Kopf (18), einen Sitz (31) zwischen der Versorgung (2, 7) und der Hinterradbremse (5) umfaßt, mit welchem der Kopf zur Steuerung einer Verbindung zwischen der Versorgung (8) und der hinteren Bremse (5) in Eingriff bringbar ist, einer Feder (24), welche zur Vorspannung des Kopfes (8) auf den Sitz (31) wirkt, und einer Stange (19), welche auf den Kopf (18) wirkt und durch welche eine Kraft zum Halten des Kopfes (18) weg von dem Sitz (31) zumindest übertragen wird, wenn der Kolben (14) sich in der vorbewegten Stellung befindet.

5. System nach Anspruch 4, dadurch gekennzeichnet, daß die Stange (19) mit dem Kolben (18) zusammenwirkt und sich durch einen Durchlaß (21) in einer Trennwand (22) erstreckt, wobei eine Fläche an der Seite der Trennwand (22) entfernt von dem Kolben (14) den Sitz (31) bildet, und die Fläche an der entgegengesetzten Seite der Trennwand (22) den Anschlag definiert.

6. System nach Anspruch 4, dadurch gekennzeichnet, daß der Kopf (18) in einer Blindbohrung (30) in dem Kolben (14) aufgenommen ist, mit welchem die Versorgung (8) in Verbindung steht, und der Sitz (31) durch eine radial nach innen gerichtete Fläche an dem offenen Ende der Bohrung (30) definiert wird, wobei die Stange (19) von der Blindbohrung (30) zur Zusammenwirkung mit einer Wandung an dem benachbarten Ende der Bohrung (31), welche auch den Anschlag definiert, vorsteht.

7. System nach einem der vorherigen Ansprüche, dadurch gekennzeichnet, daß der Kolben (14) durch Mittel vorgespannt wird, welche abhängig sind vom Gewicht der Hinterachse des Fahrzeuges, wobei im beladenen Zustand die Größe des Einschaltpunktes weiter zunimmt.

8. System nach Anspruch 7, dadurch gekennzeichnet, daß die Mittel eine Vorspannfeder umfassen, und der zweite Bereich des Kolbens, welcher einen geringeren Flächenbereich aufweist, eine Stange (8) umfaßt, welche von dem Gehäuse (12) vorsteht und mit welcher die Vorspannfeder zusammenwirkt.

9. Eine hydraulische Bremsanordnung der Tandem-Bauweise mit zwei unabhängigen Bremssystemen, bei welcher jedes System ein Bremssystem gemäß einem der vorgehenden Ansprüche umfaßt, dadurch gekennzeichnet, daß die Versorgung jedes Systems jeweils einen Druckraum (2, 7) eines Tandem-Hauptzylinders (1) umfaßt.

## Revendications

1. Un système de freinage hydraulique antiblocage pour un véhicule du type à quatre roues, où le comportement d'une roue avant freinée (4) est détecté par un dispositif qui agit dans une condition de dérapage pour actionner un modulateur (10) antiblocage dans un mode antiblocage afin de moduler la fourniture de fluide de serrage de frein provenant d'une alimentation (2, 7), non seulement au frein (3) prévu sur la roue avant (4), mais également à un frein (5) d'une roue arrière (6) du véhicule, et une soupape de répartition (11) est disposée entre l'alimentation et le frein arrière (5), sur le côté d'aval du modulateur (10), caractérisé en ce que la soupape de répartition (11) comprend un corps (12) pourvu d'un alésage (13) dans lequel coulisse un piston (14) adapté pour commander le fonctionnement d'une soupape de dosage (17) par l'intermédiaire de laquelle une pression provenant de l'alimentation (2, 7) est appliquée au frein arrière (5), le piston étant déplaçable dans l'alésage entre une première position avancée définie par coopération avec une butée (22), et une position rétractée, un ressort (23) poussant le piston dans la position avancée où la soupape de dosage est ouverte, et le piston comportant des première et seconde faces répondant à une pression (28, 26), ayant des surfaces utiles respectivement grande et petite et dont la première face (28) répond à une pression appliquée au frein de roue arrière (5) par l'intermédiaire de la soupape de dosage (17), tandis que la seconde face (26) répond à une pression provenant du modulateur (10) et qui est appliquée au frein de roue avant (3), l'agencement étant tel que la soupape de dosage soit ouverte jusqu'à ce que les pressions agissant sur les faces répondant à des pressions atteignent des valeurs telles que la force résultante agissant sur le piston soit suffisante pour faire déplacer le piston vers la position rétractée en opposition à la force dans le ressort, en permettant ainsi la fermeture de la soupape de dosage.

2. Un système selon la revendication 1, caractérisé en ce que le frein arrière (5) est situé sur la roue (6) diagonalement opposée par rapport au frein avant (3).

3. Un système selon la revendication 1 ou la revendication 2, caractérisé en ce que le piston (14) a un profil différentiel comportant une première partie de grande section opérant dans une partie de l'alésage qui a une grande section, et une seconde partie de petite section opérant dans une partie de l'alésage qui a une petite section, la première face (28) répondant à une pression comprenant la section de la première partie, et la seconde face répondant à une pression comprenant une section définie par la différence entre les sections de la première partie et de la seconde partie.

4. Un système selon une quelconque des revendications précédentes, caractérisé en ce que la soupape de dosage (17) comprend une tête (18), un siège (31) situé entre l'alimentation (2, 7) et le frein de roue arrière (5) et contre lequel la tête peut s'appliquer pour commander la communication entre l'alimentation (8) et le frein arrière (5), un ressort (24) agissant de façon à pousser la tête (18) vers le siège (31), et une tige (19) agissant sur la tête (18) et par l'intermédiaire de laquelle une force est transmise pour maintenir la tête (18) écartée du siège (31) au moins lorsque le piston (14) se trouve dans la position avancée.

5. Un système selon la revendication 4, caractérisé en ce que la tige (19) coopère avec le piston (18) et s'étend dans un passage (21) prévu dans une cloison séparatrice (22), une face située du côté de la cloison séparatrice (22) qui est opposé au piston (14) définissant le siège (31), et la face située sur le côté opposé de la cloison séparatrice (22) définissant la butée.

6. Un système selon la revendication 4, caractérisé en ce que la tête (18) est logée dans un trou borgne (30) prévu dans le piston (14) et avec lequel l'alimentation (8) communique, et le siège (31) est défini par une face radiale, dirigée vers l'intérieur et située à l'extrémité ouverte de l'alésage (30), la tige (19) dépassant du trou borgne (30) pour coopérer avec une paroi située à l'extrémité adjacente de l'alésage (31) et définissant également la butée.

7. Un système selon une quelconque des revendications précédentes, caractérisé en ce que le piston (14) est sollicité par des moyens répondant au poids s'exerçant sur l'essieu arrière du véhicule de telle sorte que, en charge, la valeur correspondant au point d'inflexion soit encore augmentée.

8. Un système selon la revendication 7, caractérisé en ce que lesdits moyens comprennent un ressort de sollicitation et la seconde partie du piston, qui a une petite section, comprend une tige (8) qui dépasse du corps (12) et avec laquelle coopère le ressort de sollicitation.

9. Une installation de freinage hydraulique du type tandem comprenant deux systèmes de freinage indépendants, où chaque système comprend un système de freinage conforme à une quelconque des revendications précédentes, caractérisée en ce que l'alimentation de chaque système comprend une chambre de pression respective (2, 7) d'un maître-cylindre tandem (1).

FIG.1.

FIG.2.

FIG.3.

FIG.4.